# EUROPEAN PATENT SPECIFICATION

(11) **EP 3 913 007 B1**
(45) Date of publication and mention of the grant of the patent: **25.11.2026**
(21) Application number: 21174667.2
(22) Date of filing: 19.05.2021
(51) Int. Cl.: C08F 297/04, C08L 53/02, C08L 95/00

(54) **BLOCK COPOLYMERS AND POLYMER MODIFIED BITUMEN THEREFROM**
BLOCKCOPOLYMERE UND POLYMERMODIFIZIERTES BITUMEN DARAUS
COPOLYMÈRES SÉQUENCÉS ET BITUME MODIFIÉ À POLYMÈRES AINSI OBTENU

(30) Priority: 22.05.2020 US 202062704691 P
(43) Date of publication of application: 24.11.2021
(73) Proprietor: Kraton Polymers Research B.V., 1031 HL Amsterdam (NL)
(72) Inventor: JELLEMA, Erica, Houston, Texas 77084 (US); PUCHALSKI, Sebastian, Houston, Texas 77084 (US); Q. KLUTTZ, Robert, Houston, Texas 77084 (US); HARTEMINK, Rombout, Houston, Texas 77084 (US)
(74) Representative: Henkel & Partner mbB

(56) References cited:
- EP-A1- 0 728 814
- WO-A1-95/07307
- US-A- 5 795 944
- US-A1- 2009 131 558

## Description

### FIELD

The present disclosure relates to block copolymers and their use for producing polymer-modified bitumen and derived asphalt compositions.

### BACKGROUND

The use of bitumen in the manufacture of materials, e.g., asphalt, for highway and for industrial applications is known. Bitumen is the main hydrocarbon binder used in the field of road construction and civil engineering. To be used as a binder in these different applications, it is desirable for the bitumen to have certain mechanical properties, e.g., viscoelastic, adhesive and/or cohesive properties. The mechanical properties of the bitumen and of the binder compositions comprising the bitumen are measured by standardized tests, such as determination of the softening point Tsp, the penetrability and other rheological characteristics. US 5,795,944 discloses a process for the polymerization of dienes which comprises anionically polymerizing dienes in the presence of an anionic polymerization initiator and a microstructure control agent is improved by adding the control agent to the polymerization mixture in two or more doses to closely control the vinyl content of the polymer produced. EP 0 728 814 A1 relates to a bituminous composition which comprises a bituminous component and a block copolymer composition comprising at least one block of a conjugated diene and at least one block of a monovinylaromatic hydrocarbon, wherein the block copolymer composition has a vinyl content of at least 25% by weight based on the total diene content and a diblock content of 25 wt% or less, and any diblock copolymer present has an apparent molecular weight which is in the range of from 100,000 to 170,000. US 2009/131558 A1 describes a modified asphalt composition obtained by blending asphalt with a complex block copolymer, which is prepared by polymerizing styrene in the presence of an anionic polymerization initiator to prepare a polystyrene solution, adding butadiene to the polystyrene solution, and then further polymerizing styrene, and wherein a triblock copolymer and diblock copolymer are present at a specific proportion.

Polymer modification of bitumens has been used to improve the properties. However, there is a continuing need for enhanced binder formulations to further improve the properties of asphalt mixes, such as improved elastomeric response, decreased fatigue cracking, reduced low temperature cracking, and reduced rutting, caused by load factors, weather conditions, etc. to improve the performance of the resulting roads.

### SUMMARY

The present invention refers to a polymer modified bitumen composition comprising at least a bitumen and, in an amount of 1 to 25 wt.% relative to the overall weight of the composition, a block copolymer having the formula A-B-A' or (A-B)ₙ-X-(B-A')ₘ, where A and A' are polystyrene blocks having different peak molecular weights, with the peak molecular weight difference ranging from 3,000 to 8,000 g/mol, and B is a poly(conjugated diene) block. n and m > = 1, and X is a coupling agent. Block B has an average vinyl content of 10 - 60 mol. %. Polystyrene content of the overall polymer ranges from 20 - 35 wt. %. The copolymer has a peak molecular weight ranging from 200,000 - 300,000 g/mol.

In embodiments, the block copolymer has the formula (A-B)ₙ-X-(B-A')ₘ with n and m having a value of 1, and the block copolymer further comprises up to 25 wt. % based on the total weight of the block copolymer, a second block copolymer having the structure (A-B)ₙ-X-(B-A')ₘ, with n and m having a value of > 1 and <= 5.

In another embodiment, the polymer-modified asphalt consists essentially of, or consists of: (i) a linear sequential block copolymer of formula A-B-A' or (A-B)ₙ-X-(B-A')ₘ, as described above; (ii) at least one base bitumen; and (iii) optionally at least one crosslinking agent.

In another embodiment, a method for preparing a polymer-modified bitumen composition is described. The method comprises, or consists essentially of, or consists of: forming a mixture of the block copolymer and a bitumen; optionally adding a crosslinker; and blending at 140-220 °C to form the polymer-modified bitumen composition. The crosslinker can be based on a sulfur donor, peroxide or any other chemistry commonly used in industry to crosslink styrenic block copolymers in bitumen.

### DESCRIPTION

The following terms, used in the specifications, will have the following meanings:

"Molecular weight" refers to the styrene equivalent molecular weight in g/mol of a polymer block or a block copolymer. The molecular weights can be measured with Gel Permeation Chromatography (GPC) using polystyrene calibration standards, such as is done according to ASTM 5296-19. The chromatograph is calibrated using commercially available polystyrene molecular weight standards. The molecular weight of polymers measured using GPC so calibrated are styrene equivalent molecular weights. The styrene equivalent molecular weight may be converted to true molecular weight when the styrene content of the polymer and the vinyl content of the diene segments are known. The detector can be a combination ultraviolet and refractive index detector. The molecular weights expressed herein are measured at the peak of the GPC trace, which can be converted to true molecular weights, and are commonly referred to as "peak molecular weight" (Mₚ). Unless converted to true molecular weights, as described above, the molecular weights quoted refer to the 'styrene equivalent peak molecular weights'.

"Vinyl content" of a polymer or a block copolymer refers to the amount of vinyl groups generated when a conjugated diene adds via a 1,2-mechanism, resulting in an olefinic or vinyl group, adjacent to the polymer backbone. The vinyl content can be measured by Nuclear Magnetic Resonance spectroscopy (NMR), and is generally expressed as mol% of the conjugated diene part. Vinyl content in embodiments can be tapered, present as a block or homogeneously distributed. At constant temperature, vinyl content of the polymer can be controlled by the concentration of the microstructure control agent during polymerisation. If the dosage is constant, the vinyl distribution is approximately even. If the dosage is gradually increased during the polymerization, the distribution is tapered. If the dosage is increased all at once, typically from zero to high, vinyl is distributed in blocks of low initially and high at the end.

"Coupling efficiency" (CE), expressed as %CE, is calculated from the GPC trace using the values of the wt. % of the coupled polymer and the wt% of the uncoupled polymer. The wt.% of the coupled polymer and the uncoupled polymer are determined using the output of a differential refractometer detector. The intensity of the signal at a specific elution volume is proportional to the amount of material of the molecular weight corresponding to a polystyrene standard detected at that elution volume. Thus the area under the curve spanning the MW range corresponding to coupled polymer is representative of the %wt. coupled polymer, and likewise for the uncoupled polymer. %CE is given by: 100*(wt % of coupled polymer) / (wt.% of coupled polymer + wt. % of uncoupled polymer). For example, if a coupling efficiency is 80%, then the polymer will contain 20% diblock and 80% triblock and multi-arm block.

"Polystyrene content" or PSC refers to the percent weight of polymerized styrene in a block copolymer, calculated by dividing the sum of molecular weight of all polystyrene blocks by the total molecular weight of the block copolymer. PSC can be determined using proton-NMR.

"Liquid asphalt" and "bitumen" are used interchangeably to mean both natural and manufactured forms of the substance.

Asphalt (Europe) or "Asphalt Mix" (US) refers to the mixture of aggregate fractions and bituminous binder as base material for bound layers of the road structure.

"Polymer-modified asphalt" or PMA is usually used in the US, while "Polymer-Modified Bitumen" or PMB is usually used in Europe, referring to a bituminous binder, such as a 'polymer modified bituminous' or 'polymer modified asphalt' binder.

MSCR or "Multiple Stress Creep Recovery" test, also listed as AASHTO TP70 and AASHTO MP19, refers a creep and recovery test to evaluate a binder's potential for permanent deformation, eliminating the need to run separate tests such as elastic recovery, toughness and tenacity, and force ductility to indicate sufficient polymer modification of asphalt binders. In the MSCR test with a Dynamic Shear Rheometer (DSR), 1-sec. creep load is applied to the asphalt binder sample, followed by 9 seconds of recovery, over multiple stress levels of 0.1 and 3.2 kPa at 10 cycles for each stress level.

The disclosure relates to a Linear Sequential Styrenic Block Copolymer (SBC) composition optimized for performance grade paving applications, particularly with Multiple Stress Creep Recovery (MSCR) test. The SBC may be referred herein as 'Linear Sequential Block Copolymer," as the structure is sequential even if the production method in some embodiments involves coupling with the use of a coupling agent, and the SBC composition may include some multi-arm species.

Linear Sequential Styrenic Block Copolymer (SBC): The SBC comprises a linear block copolymer having a formula of A-B-A' or (A-B)ₙ-X-(B-A')ₘ, wherein X is a coupling agent, and n and m > = 1.

Blocks A and A' are vinyl aromatic blocks having different molecular weights, with styrene as a major component, and structurally related vinyl aromatic monomers as the minor component in mixtures selected from the group of o-methylstyrene, p-methylstyrene, p-tert-butylstyrene, 2,4-dimethylstyrene, α-methylstyrene, vinylnaphtalene, vinyltoluene, vinylxylene, 1,1-diphenylethylene, or combinations thereof. In certain embodiments, A and A' blocks have different molecular weight, a smaller block and a larger block, with the difference of the MW of the smaller and larger blocks is in the range of 3,000 to 8,000, or preferably 3,500 to 7,000.

In embodiments, the SBC has a PSC of 20 - 35 wt. %, or 23 - 33 wt. %, or 27 - 33 wt. %, or 29 - 33 wt. %, relative to the overall weight of the SBC.

Block B is a conjugated diene block, where the diene can be any conjugated diene. Alternatively, the conjugated diene has 4-8 carbon atoms. In embodiments, the conjugated diene is a butadiene monomer or an isoprene monomer that is substantially, or contains minor proportions, e.g., up to 10% by weight, of structurally related conjugated dienes, such as 2,3-dimethyl-1,3-butadiene, isoprene, 1,3-pentadiene, farnesene, myrcene, and 1,3-hexadiene. Alternatively, substantially pure butadiene or substantially pure isoprene can be used to prepare the conjugated diene blocks. In embodiments, the conjugated diene block comprises a mixture of butadiene and isoprene monomers. In embodiments, the conjugated diene block contains a residual coupling agent.

In embodiments, block B has a vinyl content of 20 - 60 mol%, or 25-55 mol %, or 35-45 mol %, or > 30 mol %, or < 50 mol%. It is recognized that the vinyl content is averaged, and by varying the addition of the microstructure controlling agent, products can be produced with vinyl content being tapered or blocky, and not homogeneous. In embodiments, the vinyl content is regularly distributed over the conjugated diene block, or as a gradient in the conjugated diene block, or present in distinct blocks of standard and high vinyl content, whereby standard refers to levels typically obtained when polymerizing without microstructure modifiers hence less than 20%, or typically in the range of 7-15%, while high refers to levels obtained with microstructure modifiers, ranging from > 20%, e.g., 22-50%, or 25-40 %,or as high as 75%. In embodiments, the vinyl content of Block B is controlled with the addition of microstructure modifiers, and / or the sequencing of the addition and controlling of temperature of the reaction.

In embodiments, the SBC has a formula of A-B-A', or (A-B)ₙ-X-(B-A')ₘ, wherein A and A' together form the polystyrene content of the block copolymer molecules, and with n and m having a value of 1. In embodiments, the SBC further comprises up to 20 wt. %, or < 25 wt.%, or 3-15 wt. % of block copolymers having structure (A-B)ₙ-X-(B-A')ₘ with n and / or m > 1, or having a value of up to 5, or ranging from 2-4.

In embodiments, the SBC has a molecular weight of 200,000 - 300,000 g/mol, or > 210,000 g/mol, or < 290,000 g/mol, or in a range of 220,000 - 270,000 g/mol.

Preparation of the Linear Sequential SBC: The SBC can be produced via sequential polymerization or through polymerization and coupling. Polymerization can be achieved by contacting the appropriate monomers with an organoalkali metal compound in a suitable solvent, at a temperature range from -150 °C - 200 °C, or > -100°C, or from 0 °C - 110 °C, or < 150 °C, or at ambient.

In embodiments, the block copolymers are prepared by anionic polymerization techniques, sequentially polymerizing styrene to form a polystyrene block, then continue polymerizing by adding butadiene to form a butadiene block, and polymerizing styrene to form a third block. Sequential polymerization ensures that each polymer molecule contains a smaller and a larger styrene block if so desired, the coupling of Polystyrene- Polybutadiene A-B and A'-B di-blocks with smaller and larger styrene blocks would result in a statistical distribution of the different sized styrene blocks over the molecules. In addition, sequential polymerization minimizes the presence of residual diblock material.

In embodiments, the block copolymers are prepared via polymerization and coupling. Coupling technique gives better control of the styrene block sizes, as well as reducing the polymer solution viscosity during the polymerization process as the living polymer viscosity is dependent on the living polymer length of two diblocks due to living polymer association. The lower viscosity enables higher polymer concentrations per batch, thereby increasing run rate and lowering energy costs involved in solvent removal.

In embodiments for the preparation of SBC having different vinyl aromatic blocks, the process starts with sequentially polymerizing anionically styrene to form a polystyrene block of a single molecular weight using an organoalkali metal compound or through the addition of further organoalkali metal compound during the styrene polymerization, forming a mixture of different molecular weight styrene blocks. The polymerization continues by adding butadiene to form a portion of the targeted butadiene block, followed by the addition of a microstructure modifier and subsequent addition of the remainder of the butadiene to form the diblock for coupling or the sequential polymer before subsequent styrene addition. The butadiene polymerized before the addition of the microstructure modifier has a low vinyl content whereas the butadiene polymerized after the microstructure modifier addition forms a distinct high vinyl section in the polybutadiene block . Diblocks can be coupled to complete the linear block copolymer with distinct high and low vinyl Polybutadiene blocks.

In embodiments, the coupling agent is selected from di- and multi-functional molecules able to couple living anionic polymers, e.g., methoxysilanes, or halogenated silanes, epoxies, adipates, benzoates, carbon dioxide, dimethyldimethoxysilane, dimethyldibchlorosilane, di-ethyl-adipate, and mixtures thereof. In embodiments, the use of coupling agent with more than 2 functional groups can with the right dosing levels result in a SBC that is largely linear product such as (A-B)ₙ-X-(B-A')ₘ with n and m having a value of 1, and with very small (< 20 wt. %, or < 10 wt. % having n and / or m having a value of > 1).

In embodiments to enhance the vinyl content of the conjugated diene portion of the SBC, or to control the vinyl content of block B, addition of microstructure modifiers and / or the sequencing of the addition and controlling of temperature of the reaction is employed. Examples of modifiers include but are not limited to polar compounds such as ethers, amines and other Lewis bases, and dialkylethers of glycols. Most preferred modifiers are selected from dialkyl ether of ethylene glycol containing the same or different terminal alkoxy groups and optionally bearing an alkyl substituent on the ethylene radical, such as monoglyme, diglyme, diethoxyethane, 1,2-diethoxy-propane, 1-ethoxy-2,2-tert-butoxyethane, of which 1,2-diethoxypropane is most preferred.

Applications of the Styrenic Block Copolymer (SBC): The SBC in embodiments is for modifying bitumens, providing polymer-modified bitumen (PMB) having improved physical properties at the same polymer concentration (weight) as compared to other types of block copolymers as discussed further below.

Preparation of the PMB: The PMB compositions can be prepared by mixing the Linear Sequential SBC with a bitumen and other appropriate components. Any type of bitumen can be used for making the PMBs. This can be advantageous in a situation where there may be variability in the quality/composition/source of the bitumen. A variety of additives can be used in combination with the block copolymers to form the PMB composition. Examples include non-polymeric additives, non-reactive polymers, and reactive polymers. Non-polymeric additives include acid-based additives, flux oils, liquid plasticizers, hydrogen sulfide scavengers, amine scavengers, acid anhydrides, such as linear and cyclic anhydrides; a sulfur source, and combinations thereof. Examples of acid-based additives include one or more of the phosphorus acids, and polyphosphoric acid.

Flux oils encompass many types of oils used to modify asphalt and are the final products in crude oil distillation. They are non-volatile oils that are blended with asphalt to soften it. They can be aromatic, paraffinic, or naphthenic. Flux oils can also be any renewable-produced vegetable or bio-oil. Blends of two or more flux oils can also be used. Flux oils can also be recycled oils either mineral or bio-derived.

In an embodiment, the SBC and at least one base bitumen are first mixed, then optionally a sulfur-based crosslinker is added to the mixture. Optionally an acid-based additive can be introduced. The resulting mixture is blended at a temperature range of 140 °C to 220 °C, or > 150°C, or < 200 °C to make the PMB. A high-shear milling process or a low-shear mixing process, as known in the art, can be used.

In embodiments, the PMB composition comprises 1-15 wt. %, or 1-10 wt %, or 2-6 wt. % SBC, based on the total weight of the PMB composition.

Uses of the PMB compositions: The PMBs are for use in applications including but not limited to asphalt pavement and roofing. Examples include road pavement materials for new pavements, for pavement preservation and for pavement rehabilitation, in the form of hot mix asphalt, cold mix asphalt, warm mix asphalt, emulsified bitumen based asphalt (chip seals, slurry seals, microseals, fog seals among others), bituminous crack fillers, and tack coat layers.

The PMBs are also valuable for use in roofing applications, where a combination of relatively low viscosity, low penetration and high softening point Tₛₚ, are desired. Examples include modified bituminous membranes, self-adhesive membranes, impact resistant shingles, laminates, shingle tab adhesives, shingle body, sheets, or roll products as well as mopping asphalt or mastic asphalt applications.

Outside of paving and roofing applications, other applications include but not limited to pipe coatings, sealants, sound damping membranes, carpets or railroad constructs.

Properties of the Polymer-modified bitumen (PMB): For paving compositions, a favorable MSCR %R is observed with the PMB made using the Linear Sequential SBC.

At a given wt. % SBC in the PMB, the composition exhibits better MSCR properties as compared to the PMBs made using other types of block copolymers of the prior art, such as radial block copolymers, or linear coupled block copolymers. Alternatively, PMBs made can exhibit similar MSCR properties at a lower polymer concentration. Therefore, the PMBs have higher efficiency on the basis of the amount of polymer.

The PMB compositions have superior properties, due in part to the elastomeric modification of the asphalt. One of the parameters that gives a measure of the effectiveness of a polymer in a PMB is "% Recovery" (herein also referred to as "% R") under a given shear stress, measured using the MSCR (Multiple Stress Creep Recovery) test as per ASTM D7405 test method. The % R value is defined by Eq (1): $% R = 100 * \left(Recoverable shear strain/Peak strain\right)$ Eq (1); wherein the recoverable shear strain is given by the difference between the instantaneous shear strain and the non-recoverable shear strain. The MSCR test is also a standard way to assess the rut resistance, especially at high temperatures, of an asphalt mix produced using the PMB. For comparing the effectiveness of a given PMB versus a reference bituminous material, the parameter %R may be used as described above.

This parameter can also be used to study the effect of different variables on the overall performance of the PMB, such as, the type of bitumen, curing temperature or curing time used for preparing the PMB, wt. % of the SBC in the PMB. The variability in bitumen can arise from numerous factors, such bitumen source, process used for making the bitumen, and composition (blend components) of the bitumen. When there is variability in bitumen grades, it is generally desirable to obtain a high %R value that does not vary too much with the chemical nature of the bitumen, leading to a more steady performance under realistic road / pavement conditions as well as the condition during the road's construction.

In accordance with the present invention, the PMB made, after being crosslinked, exhibits a %R improvement at 3.2 kPa and 64 °C of at least 10%, or at least 12%, or at least 15%, or at least 20%, relative to a PMB having a linear coupled block copolymer of molecular weight 173,000 g/mol, a vinyl content of 10 mol%, and a polystyrene content of 31%, measured at a polymer concentration of 3 wt. % ("Comparative SBC"), according to ASTM D7405.

The PMB made also has a higher softening point Tₛₚ, as compared to PMBs made using other types of block copolymers. In embodiments, the PMB, after being crosslinked, has a softening point Tₛₚ, (in degree Celsius) higher by at least 5 °C as compared to the Comparative SBC, measured at a polymer concentration of 9 wt%, according to ASTM D36 method. In embodiments, the PMB made has a Tₛₚ, of at least 10 °C higher than a PMB having a linear sequential block copolymer having a MW of 150,000 g/mol, a vinyl content of 40%, and a polystyrene content of 30%, measured at a polymer concentration of 9 wt. %, according to ASTM D36.

Examples. The following non-limiting examples are provided to illustrate the Linear Sequential SBC and properties of the PMB made therefrom. In the examples:
"RTFO" stands for Rolling Thin Film Oven.
"DSR" means Dynamic Shear Rheometer .
"ODSR" stands for Original Dynamic Shear Rheometer and signifies testing done on unaged asphalt composition using a dynamic shear rheometer.
"MSCR" means Multiple Stress Creep and Recovery. In MSCR testing, the parameter %R means the percentage of recoverable strain, which is used to evaluate the elastic recovery of a polymer modified bitumen.
"Jnr" means non-recoverable creep compliance
"BBR m average" means average m-value measured using Bending Beam Rheometry.
"BBR S average" means average S-value measured using Bending Beam Rheometry.

Delta Tc is given by the numerical difference between the low continuous grade temperature determined from the Bending Beam Rheometer (BBR) stiffness criteria (the temperature where stiffness, S, equals 300 MPa) and the low continuous grade temperature determined from the BBR m-value (the temperature where m equals 0.300).

G*·sin(δ) indicates the SuperPave fatigue parameter.

"PAV" stands for Pressure Aging Vessel, which is used to simulate long-term aging of asphalt binders.

Example to prepared C260-2 Block Copolymer: 34.5 kg styrene was added to 1032 kg of cyclohexane at 40-50 °C after which 0.88 kg of 12% sec-butyl lithium solution was added. The reaction was completed after 39 minutes. Hereafter, 169 kg of butadiene was added in 58 minutes. The polymerization was allowed to proceed for 77 minutes. Thereafter, the second portion of 34.5 kg styrene was added in 10 minutes. The polymerization was allowed to proceed for 52 minutes then 63 grams of methanol was added to terminate the polymerization. After cooling down the reaction mixture, 0.2% phenolic antioxidant by weight on polymer was added for stabilization. Product C260-2 was isolated by steam stripping to give white crumbs.

Examples Block Copolymers C260-8 and C275-1: These SBCs have the structure ABA', with the difference in MWs of A and A' blocks of 5,300 g/mol and 5,100 g/mol respectively. These were made via same procedure as above with the diethoxypropane being added after styrene polymerization but before the addition of butadiene. Quantities and reaction conditions are set out in Table 1.

**Table 1**

| Polymer | C260-2 | C260-8 | C275-1 |
|---|---|---|---|
| Styrene (kg) | 34.5 | 34.5 | 30 |
| Cyclohexane (kg) | 1032 | 1032 | 1032 |
| Sec-butyl lithium solution (kg) | 0.88 | 0.88 | 0.77 |
| Reaction time (min) | 39 | 64 | 63 |
| Diethoxypropane (g) | 0 | 204 | 204 |
| Butadiene (kg) | 169 | 169 | 179 |
| Reaction time (min) | 77 | 101 | 76 |
| Styrene (kg) | 34.5 | 34.5 | 30 |
| Reaction time (min) | 52 | 27 | 30 |
| Methanol (g) | 63 | 63 | 54 |

In addition to the above SBCs, the following block copolymers (with characteristics as in Table 2) were also used. These polymers have similar MW for the polystyrene blocks.
U-119-X is a linear sequential block copolymer.
U-1101 is a linear triblock copolymer.
C246-8 is a radial block copolymer.
U-1184 is a branched triblock (radial) copolymer.

**Table 2**

| Polymer example | Type | PS (%) | C.E. % | MW (x1000 g/mol) | Vinyl content, % |
|---|---|---|---|---|---|
| C260-2 | Linear sequential | 28 | 100 | 225 | 11 |
| **C260-8** | **Linear sequential** | **29** | **100** | **233** | **41** |
| **C275-1** | **Linear sequential** | **26** | **100** | **268** | **41** |
| U-119-X | Linear sequential | 30 | 100 | 150 | 40 |
| U-1101 | Linear triblock | 31 | 83 | 173 | 10 |
| C246-8 | Radial | 30 | 76 | 395 | 42 |
| U-1184 | Radial | 30 | 84 | 420 | 10 |

| | | | | | |
|---|---|---|---|---|---|
| *CE - coupling efficiency; PS - polystyrene content; MW Molecular weight x 1000 g/mol. | | | | | |

Example to Prepare Polymer Modified Bitumen: In the examples, each blend was made by mixing together 2.5 wt.% of a milled form of the block copolymer and 97.5 wt.% of a bitumen in low shear mode at 180 °C for 1 hour under a nitrogen blanket. After 1 hour elemental sulfur was added at 0.1 wt% of the combination of bitumen and the block polymer and blending continued for 6 more hours at 180 °C. The PMB blends were sampled for storage stability, RTFO DSR and MSCR testing at 64 °C. The results are shown in Table 3. The quantities "MSCR %R, 3.2kPa, 64 °C top" and "%R, 3.2kPa, 64 °C bottom" refers to the difference in %R between the top and bottom layers of the PMB blend, measured according to ASTM D7173. It is desirable for the PMB blend to have a low viscosity at 135 °C, a low separation (%R) Top & Bottom layers value (negative or close to 0), a high RTFO DSR, and a high RTFO MSCR.

**Table 3.**

| Polymer | U-1101 | U-119-X | C246-8 | C260-2 | C260-8 | C275-1 |
|---|---|---|---|---|---|---|
| PMB example | 12 | 11 | 13 | 8 | 9 | 10 |
| Viscosity 135°C [Pa.s] | 1.08 | 1.06 | 1.69 | 1.37 | 1.51 | 1.57 |
| MSCR, %R, 3.2kPa, 64°C top | 51 | 39 | 49 | 62 | 79 | 81 |
| MSCR, %R, 3.2kPa, 64°C bottom | 49 | 40 | 47 | 53 | 81 | 82 |
| Separation (%R) Top & Bottom layers | 1.8 | -0.3 | 1.6 | 8.6 | -2.5 | -1.2 |
| RTFO DSR G*/sin(δ) [kPa] 64°C | 6.36 | 8.28 | 8.46 | 6.91 | 6.36 | 9.58 |
| RTFO MSCR 64°C Jnr, 0.1kPa | 0.423 | 0.34 | 0.193 | 0.197 | 0.124 | 0.195 |
| RTFO MSCR 64°C Jnr, 3.2kPa | 0.594 | 0.445 | 0.307 | 0.3 | 0.209 | 0.292 |
| RTFO MSCR 64°C %R, 3.2kPa | 49.4 | 50.2 | 60.6 | 69.8 | 71.9 | 59.9 |

All PMB samples had acceptable viscosity of less than 3.0 Pa.s at 135 °C. PMB samples 9 and 10 showed no phase separation upon storage. Sample 8 showed some phase separation after storage. All PMB samples showed high RTFO DSR properties. PMB sample 9 showed the best combination of viscosity, phase stability, and MSCR properties. PMBs having high MSCR properties (superior elastomeric properties) can be valuable in paving applications. Use of PMBs having low viscosity, or a low content of the block copolymer, can lead to overall better performing roads and material cost savings.

The block copolymer C260-8, U-119-X, U-1101 and U-1184 were compared for their suitability in obtaining PMB formulations that can pass the PG64E-22 / PG76-22 performance grade parameters. For each polymer sample, 2 PMB samples were prepared, one having 3 wt. % and the other having 2 wt. % polymer. In each case, the PMB formulation was made by mixing together indicated wt.% of a milled form of the polymer, and bitumen in low shear mode at 180 °C for 1 hour under a nitrogen blanket. After 1 hour, 0.1 wt% elemental sulfur was added and blending continued for 8 hours at 180 °C. Storage stability is given by the difference in %R between the top and bottom layers of the PMB blend, measured according to ASTM D7173.

The interpolated polymer dosage based on the criteria: RTFO G*/sin(δ), 76 °C = 2.2kPa, and Jnr, 3.2kPa, 64 °C < 0.5, is shown in Table 5.

The data indicates that the PMB compositions based on the block copolymer of SBC block copolymer C260-8 have better properties than those made using block copolymers U-119-X, U-1101 and U-1184. For example, the PMB composition 14 is more efficient than PMB compositions 16, 18 and 20, on the basis of wt. % of the block copolymer for achieving a favorable MSCR %R.

**Table 4.**

| Polymer | C260-8 | C260-8 | U-1101 | U-1101 | U-1184 | U-1184 | U-119-X | U-119-X |
|---|---|---|---|---|---|---|---|---|
| PMB | 14 | 15 | 16 | 17 | 18 | 19 | 20 | 21 |
| Polymer wt. % | 3 | 2 | 3 | 2 | 3 | 2 | 3 | 2 |
| Viscosity 135°C [Pa.s] | 1.90 | 1.16 | 1.29 | 0.919 | 1.54 | 1.11 | 1.19 | 0.843 |
| Storage Stability, Top (MSCR, %R, 3.2kPa) | 90.0 | 56.1 | 67.2 | 27.1 | 53.9 | 46.1 | N/A | N/A |
| Storage Stability, Bottom (MSCR, %R, 3.2kPa) | 91.1 | 57.2 | 68.0 | 26.6 | 65.3 | 46.0 | N/A | N/A |
| Separation (%R) Top & Bottom layers | -1.1 | -1.1 | -0.8 | 0.5 | -11.4 | 0.1 | N/A | N/A |
| Original residue DSR G*/sin(δ) [kPa], 76°C | 1.69 | 1.22 | 1.39 | 1.02 | 1.45 | 1.08 | 1.37 | 0.890 |
| RTFO residue DSR G*/sin(δ) [kPa], 76°C | 3.31 | 1.97 | 2.51 | 1.53 | 2.66 | 1.88 | 2.77 | 1.90 |
| RTFO residue MSCR Jnr, 3.2kPa, 64°C | 0.127 | 0.501 | 0.305 | 0.747 | 0.276 | 0.630 | 0.194 | 0.683 |
| RTFO residue MSCR %R, 3.2kPa, 64°C | 77.8 | 50.3 | 59.9 | 43.7 | 62.3 | 40.4 | 70.4 | 33.7 |
| RTFO residue MSCR Jnr, 3.2kPa, 76°C | 0.767 | 3.23 | 2.69 | 5.83 | 1.90 | 3.77 | 2.41 | 4.88 |
| RTFO residue MSCR %R, 3.2kPa, 76°C | 61.5 | 22.9 | 20.7 | 6.5 | 34.3 | 17.5 | 20.3 | 4.8 |

**Table 5. Interpolated polymer dosage based on the criteria: RTFO G*/sin(δ), 76 °C = 2.2kPa, and Jnr, 3.2kPa, 64 °C < 0.5.**

| Polymer | C260-8 | U-119-X | U-1184 | U-1101 |
|---|---|---|---|---|
| Wt % polymer | 2.17 | 2.38 | 2.41 | 2.68 |
| Viscosity 135°C [Pa.s] | 1.28 | 0.975 | 1.29 | 1.16 |
| Original residue G*/sin(δ), 76°C | 1.30 | 1.07 | 1.23 | 1.27 |
| RTFO residue G*/sin(δ), 76°C | 2.20 | 2.23 | 2.20 | 2.20 |
| RTFO residue MSCR Jnr, 3.2kPa, 64°C | 0.376 | 0.497 | 0.485 | 0.469 |
| RTFO residue MSCR %R, 3.2kPa, 64°C | 59.6 | 47.6 | 49.4 | 53.9 |
| Low temperature PG grade | -25.5 | -23.8 | -25.2 | -26.2 |

From the interpolated data, it can be seen the PMB obtained using block copolymer C260-8 showed the most favorable overall performance at the lowest wt. % content in asphalt, as compared to polymer example U-119-X, the next best polymer.

The block copolymer C260-8 forms PMBs having superior MSCR properties even when the bitumen binder component is varied. The block copolymer C260-8 and U-1101 were chosen for this study. For each polymer sample, 2 PMB samples were prepared, one having 3 wt. % and the other having 2 wt. % of the polymer, using the same procedure described earlier. Interpolated polymer dosage based on the criteria: RTFO G*/sin(δ), 76 °C = 2.2kPa, and Jnr, 3.2kPa, 64 °C < 0.5, were determined. Data are shown in Tables 6 and 7.

**Table 6.**

| Polymer | C260-8 | C260-8 | U-1101 | U-1101 |
|---|---|---|---|---|
| PMB Ex | 22 | 23 | 24 | 25 |
| Polymer wt. % | 3 | 2 | 3 | 2 |
| Viscosity [Pa.s] | 1.90 | 1.16 | 1.29 | 0.919 |
| Original residue DSR G*/sin(δ) [kPa], 76°C | 1.69 | 1.22 | 1.39 | 1.02 |
| RTFO residue DSR G*/sin(δ) [kPa], 76°C | 3.31 | 1.97 | 2.51 | 1.53 |
| RTFO residue MSCR Jnr, 3.2kPa, 64°C | 0.127 | 0.501 | 0.305 | 0.747 |
| RTFO residue MSCR %R, 3.2kPa, 64°C | 77.8 | 50.3 | 59.9 | 43.7 |
| RTFO residue MSCR Jnr, 3.2kPa, 76°C | 0.767 | 3.23 | 2.69 | 5.83 |
| RTFO residue MSCR %R, 3.2kPa, 76°C | 61.5 | 22.9 | 20.7 | 6.5 |

**Table 7. Interpolated polymer dosage based on Jnr, 3.2kPa, 64 °C < 0.5 to target PG64E-28 grade.**

| Polymer example | C260-8 | U-1101 |
|---|---|---|
| Wt % polymer | 2.17 | 2.81 |
| Viscosity 135°C [Pa.s] | 0.852 | 0.830 |
| RTFO residue G*/sin(δ), 76°C | 4.21 | 4.58 |
| RTFO residue MSCR %R, 3.2kPa, 64°C | 65.9 | 63.2 |

Table 8 shows the Tₛₚ,Ring and Ball of PMBs made using polymers C260-8, U-1101 and U-1184. At a given wt. % of the polymer, the PMB made using polymer C260-8 had the highest Ring and Ball Tₛₚ,. PMBs such as that made from Linear Sequential block copolymer C260-8 are valuable in paving applications having a high Ring and Ball Tₛₚ.

**Table 8.**

| Polymer | C260-8 | | U-1101 | | U-119-X | |
|---|---|---|---|---|---|---|
| wt % SBS | 3 | 2 | 3 | 2 | 3 | 2 |
| Softening Point [°C] | 67.8 | 60.6 | 59.0 | 57.0 | 58.8 | 55.2 |

Table 8 also shows that at a given wt. % of the polymer, PMB based on polymer C260-8, besides showing a %R improvement (cf: Table 4), also has a higher Tₛₚ than PMB samples based on block copolymers U-1101 and U-119-X. Thus, PMB based on block copolymer C260-8 has high efficiency per unit weight of the polymer.

The comparative performance of block copolymers C260-8, U-119-X, and U-1101 was also studied as a function of different bitumen grades, A, B, and C. All blends were made under conditions listed in Table 9.

**Table 9. Preparation of the Formulations.**

| Polymer wt. % | 9 |
|---|---|
| Blend Size | Quart (approximately 1 liter) |
| Nitrogen blanket used? | no |
| High Shear used? | yes |
| High Shear Time | 20 min |
| High Shear Temperature | 190-219 °C |
| Low Shear Used | No |
| Sample conditioning method prior to measuring properties | Placed for 30 min in oven @190 °C before sampling |

Properties of PMB 26 - 37 made from polymers C260-8, U-119-X, and U-1101 are shown in Table 10. For different bitumen grades, the PMBs made from polymer C260-8 have satisfactory penetration Tₛₚ, while yielding a relative low viscosity. Phase separation % was measured as follows. Freshly formulated PMB is poured into a 1-L metal can. The can is then covered with a lid and placed in an over at 160 °C for 5 days. Then the sample is removed and rapidly cooled to room temperature for the PMB sample to solidify. Then the bottom of the metal can is removed and the sides of the can are heated until the PMB sample inside the can slides out. The PMB sample is probed from bottom to top with a needle to detect if phase separation of polymer in the sample has occurred (in a phase separated sample, the polymer floats towards the top of the sample markedly changing the physical nature of the top and bottom portions). Sample is then sliced with a hot knife at the height separating the polymer-rich and polymer-deprived parts. Polymer-rich part of the sample is weighed and the weight is divided by the total weight of the sample and converted to percentage. 100% polymer rich indicates that the polymer remained fully dispersed throughout the sample. 50% phase separation indicates that the polymer rich phase made up 50% weight of the total sample after the test has been completed. 100% polymer rich is the desired test outcome.

**Table 10.**

| Polymer | | C260-8 | U-119-X | U-1101 |
|---|---|---|---|---|
| | PMB Example | 26 | 27 | 29 |
| Asphalt binder A | Softening Point [°C] | 107.5 | 89.5 | N/A |
| | Penetration, 25 °C [dmm] | 73 | 78 | N/A |
| | Viscosity at 176.7°C, 14.88 1/s shear rate [Pa.s] | 0.488 | 0.206 | N/A |
| | Phase Separation (wt% polymer rich phase) | 100% | 100% | N/A |
| Asphalt binder B | PMB Example | 30 | 31 | 33 |
| | Softening Point [°C] | 116.0 | 98.5 | 103.5 |
| | Penetration, 25 °C [dmm] | 40 | 39 | 37 |
| | Viscosity at 176.7°C, 14.88 1/s shear rate [Pa.s] | 0.650 | 0.259 | 0.378 |
| | Phase Separation (wt% polymer rich phase) | 87% | 100% | 100% |
| Asphalt binder C | PMB Example | 34 | 35 | 37 |
| | Softening Point [°C] | 116.5 | 100.0 | N/A |
| | Penetration, 25 °C [dmm] | 36 | 39 | N/A |
| | Viscosity at 176.7°C, 14.88 1/s shear rate [Pa.s] | 1.53 | 0.881 | N/A |
| | Phase Separation (wt% polymer rich phase) | 47% | 46% | N/A |

The data shows that with comparatively equal penetration for all three blends and relatively low viscosity, the PMB of example 26 exhibited the highest Tₛₚ leading to the best overall performance. The PMB composition 26 has a unique balance of Tₛₚ, penetration, and viscosity.

Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A polymer modified bitumen composition comprising
at least a bitumen and, in an amount of 1 to 25 wt.% relative to the overall weight of the composition, a block copolymer having a formula of A-B-A' or (A-B)ₙ-X-(B-A')ₘ,
wherein:
A and A' are vinyl aromatic blocks having different peak molecular weights,
A and A' have different peak molecular weights, with the peak molecular weight difference ranging from 3,000 to 8,000 g/mol,
B is a conjugated diene block,
B has an average vinyl content ranging from 20 - 60 mol %,
n and m > = 1, and X is a coupling agent;
wherein
the block copolymer has a polystyrene content of 20 - 35 wt. %, relative to the overall weight of the block copolymer, and
the block copolymer has a peak molecular weight of 200,000 - 300,000 g/mol.

2. The polymer modified bitumen composition of claim 1, wherein the block copolymer has the formula (A-B)ₙ-X-(B-A')ₘ with n and m having a value of 1.

3. The polymer modified bitumen composition of any of claims 1-2, wherein the block copolymer further comprises up to 25 wt. % based on the total weight of the block copolymer, a second block copolymer having the structure (A-B)ₙ-X-(B-A')ₘ, with n and m having a value of > 1 and <= 5.

4. The polymer modified bitumen composition of any of claims 1-3, wherein the block copolymer has a peak molecular weight of 220,000 - 270,000 g/mol.

5. The polymer modified bitumen composition of any of claims 1-4, wherein block B of the block copolymer has a vinyl content of 25 - 55 mol %.

6. The polymer modified bitumen composition of any of claims 1-5, wherein the vinyl is distributed evenly or with a gradient over the conjugated diene block B of the block copolymer.

7. The polymer modified bitumen composition of any of claims 1-5, where the vinyl is distributed in one or more distinct blocks of the block copolymer with vinyl content of < 20% or >= 22% in the conjugated diene block B.

8. The polymer modified bitumen composition of any of claims 1-7, wherein the block copolymer is produced by any of sequential anionic polymerization, or sequential anionic polymerization followed by coupling.

9. The polymer modified bitumen composition of claim 8, wherein the block copolymer has the formula A-B-A', and wherein the block copolymer is produced by sequential anionic polymerization.

10. The polymer modified bitumen composition of claim 8, where the block copolymer has the formula (A-B)ₙ-X-(B-A')ₘ, and wherein the block copolymer is produced by sequential anionic polymerization followed by coupling with a coupling agent.

11. The polymer modified bitumen composition of claim 10, wherein the coupling agent is selected from the group of methoxysilanes, halogenated silanes, epoxies, adipates, benzoates, carbon dioxide, dimethyldimethoxysilane, dimethyldibchlorosilane, di-ethyl-adipate, and mixtures thereof.

12. The polymer modified bitumen composition of any of claims 8-11, wherein at least a microstructure modifier is added to the polymerization process to control the vinyl content of block B, and wherein the microstructure modifier is selected from ethers, amines, dialkylethers of glycols, and mixtures thereof.

13. The polymer modified bitumen composition of any of claims 1-12further comprising:
at least one crosslinking agent; and
optionally additional additives.

14. The polymer modified bitumen composition of claim 13, wherein the composition is used in an asphalt pavement product or an asphalt roofing product.

15. The polymer modified bitumen composition of claim 13, wherein the composition is used in new pavements, pavement preservation, pavement rehabilitation, hot mix asphalt, cold mix asphalt, warm mix asphalt, emulsified bitumen based asphalt, modified bitumen membranes, self-adhesive membranes, impact resistant shingles, laminates, shingle tab adhesives, shingle bodies, sheets, rolls, pipe coatings, sealants, sound damping membranes, carpets, railroad constructs, crack fillers, chip seals, and micro surfacings.

## Patentansprüche

1. Polymermodifizierte Bitumenzusammensetzung, umfassend zumindest ein Bitumen und, in einer Menge von 1 bis 25 Gew.-%, bezogen auf das Gesamtgewicht der Zusammensetzung, ein Blockcopolymer mit der Formel A-B-A' oder (A-B)ₙ-X-(B-A')ₘ,
wobei:
A und A' vinylaromatische Blöcke mit unterschiedlichen Peak-Molekulargewichten sind,
A und A' unterschiedliche Peak-Molekulargewichte aufweisen, wobei die Differenz der Peak-Molekulargewichte im Bereich von 3.000 bis 8.000 g/mol liegt,
B ein konjugierter Dienblock ist,
B einen durchschnittlichen Vinylgehalt im Bereich von 20 bis 60 Mol-% aufweist,
n und m ≥ 1 sind und X ein Kopplungsmittel ist;
wobei
das Blockcopolymer einen Polystyrolgehalt von 20 bis 35 Gew.-%, bezogen auf das Gesamtgewicht des Blockcopolymers, aufweist und
das Blockcopolymer ein Peak-Molekulargewicht von 200.000 bis 300.000 g/mol aufweist.

2. Polymermodifizierte Bitumenzusammensetzung nach Anspruch 1, wobei das Blockcopolymer die Formel (A-B)ₙ-X-(B-A')ₘ aufweist, wobei n und m den Wert 1 aufweisen.

3. Polymermodifizierte Bitumenzusammensetzung nach einem der Ansprüche 1 bis 2, wobei das Blockcopolymer weiterhin bis zu 25 Gew.-%, bezogen auf das Gesamtgewicht des Blockcopolymers, eines zweiten Blockcopolymers mit der Struktur (A-B)ₙ-X-(B-A')ₘ umfasst, wobei n und m einen Wert von > 1 und ≤ 5 aufweisen.

4. Polymermodifizierte Bitumenzusammensetzung nach einem der Ansprüche 1 bis 3, wobei das Blockcopolymer ein Peak-Molekulargewicht von 220.000 bis 270.000 g/mol aufweist.

5. Polymermodifizierte Bitumenzusammensetzung nach einem der Ansprüche 1 bis 4, wobei Block B des Blockcopolymers einen Vinylgehalt von 25 bis 55 Mol-% aufweist.

6. Polymermodifizierte Bitumenzusammensetzung nach einem der Ansprüche 1 bis 5, wobei das Vinyl gleichmäßig oder mit einem Gradienten über den konjugierten Dienblock B des Blockcopolymers verteilt ist.

7. Polymermodifizierte Bitumenzusammensetzung nach einem der Ansprüche 1 bis 5, wobei das Vinyl in einem oder mehreren unterschiedlichen Blöcken des Blockcopolymers verteilt ist, wobei der Vinylgehalt im konjugierten Dienblock B < 20 % oder ≥ 22 % beträgt.

8. Polymermodifizierte Bitumenzusammensetzung nach einem der Ansprüche 1 bis 7, wobei das Blockcopolymer durch sequenzielle anionische Polymerisation oder sequenzielle anionische Polymerisation mit anschließender Kopplung hergestellt wird.

9. Polymermodifizierte Bitumenzusammensetzung nach Anspruch 8, wobei das Blockcopolymer die Formel A-B-A' aufweist und wobei das Blockcopolymer durch sequenzielle anionische Polymerisation hergestellt wird.

10. Polymermodifizierte Bitumenzusammensetzung nach Anspruch 8, wobei das Blockcopolymer die Formel (A-B)ₙ-X-(B-A')ₘ aufweist und wobei das Blockcopolymer durch sequenzielle anionische Polymerisation mit anschließender Kopplung mit einem Kopplungsmittel hergestellt wird.

11. Polymermodifizierte Bitumenzusammensetzung nach Anspruch 10, wobei das Kopplungsmittel aus der Gruppe bestehend aus Methoxysilanen, halogenierten Silanen, Epoxiden, Adipaten, Benzoaten, Kohlendioxid, Dimethyldimethoxysilan, Dimethyldichlorsilan, Diethyladipat und Gemischen davon ausgewählt ist.

12. Polymermodifizierte Bitumenzusammensetzung nach einem der Ansprüche 8 bis 11, wobei dem Polymerisationsprozess zumindest ein Mikrostrukturmodifikator zugegeben wird, um den Vinylgehalt des Blocks B zu steuern, und wobei der Mikrostrukturmodifikator aus Ethern, Aminen, Glykoldialkylethern und Gemischen davon ausgewählt ist.

13. Polymermodifizierte Bitumenzusammensetzung nach einem der Ansprüche 1 bis 12, weiterhin umfassend:
zumindest ein Vernetzungsmittel; und
optional zusätzliche Additive.

14. Polymermodifizierte Bitumenzusammensetzung nach Anspruch 13, wobei die Zusammensetzung für ein Asphaltfahrbahnbelagsprodukt oder ein Asphaltbedachungsprodukt verwendet wird.

15. Polymermodifizierte Bitumenzusammensetzung nach Anspruch 13, wobei die Zusammensetzung für neue Fahrbahnbeläge, die Instandhaltung des Fahrbahnbelags, die Instandsetzung des Fahrbahnbelags, Heißmischasphalt, Kaltmischasphalt, Warmmischasphalt, Asphalt auf Basis von emulgiertem Bitumen, Membranen aus modifiziertem Bitumen, selbstklebende Membranen, schlagfeste Schindeln, Laminate, Klebstoffe für Schindellaschen, Schindelkörper, Bahnen, Rollen, Rohrbeschichtungen, Dichtstoffe, schalldämmende Membranen, Teppiche, Eisenbahnkonstruktionen, Rissfüller, Splittabdichtungen und Mikrobeläge verwendet wird.

## Revendications

1. Composition de bitume modifié à polymères comprenant
au moins un bitume et, en une quantité de 1 à 25 % en poids par rapport au poids total de la composition, un copolymère séquencé ayant pour formule A-B-A' ou (A-B)ₙ-X-(B-A')ₘ,
dans laquelle :
A et A' sont des blocs vinylaromatiques ayant des masses moléculaires au pic différentes,
A et A' ont des masses moléculaires au pic différentes, la différence de masse moléculaire au pic allant de 3 000 à 8 000 g/mol,
B est un bloc de diène conjugué,
B présente une teneur moyenne en vinyle allant de 20 à 60 % en moles,
n et m > = 1, et X est un agent de couplage ;
dans laquelle
le copolymère séquencé présente une teneur en polystyrène de 20 à 35 % en poids, par rapport au poids total du copolymère séquencé, et
le copolymère séquencé présente une masse moléculaire au pic de 200 000 à 300 000 g/mol.

2. Composition de bitume modifié à polymères selon la revendication 1, dans laquelle le copolymère séquencé a la formule (A-B)ₙ-X-(B-A')ₘ, n et m ayant une valeur de 1.

3. Composition de bitume modifié à polymères selon l'une quelconque des revendications 1 et 2, dans laquelle le copolymère séquencé comprend en outre jusqu'à 25 % en poids, sur la base du poids total du copolymère séquencé, d'un second copolymère séquencé ayant la structure (A-B)ₙ-X-(B-A')ₘ, n et m ayant une valeur de > 1 et <= 5.

4. Composition de bitume modifié à polymères selon l'une quelconque des revendications 1 à 3, dans laquelle le copolymère séquencé présente une masse moléculaire au pic de 220 000 à 270 000 g/mol.

5. Composition de bitume modifié à polymères selon l'une quelconque des revendications 1 à 4, dans laquelle le bloc B du copolymère séquencé présente une teneur en vinyle de 25 à 55 % en moles.

6. Composition de bitume modifié à polymères selon l'une quelconque des revendications 1 à 5, dans laquelle le vinyle est réparti uniformément ou selon un gradient sur le bloc de diène conjugué B du copolymère séquencé.

7. Composition de bitume modifié à polymères selon l'une quelconque des revendications 1 à 5, dans laquelle le vinyle est réparti dans un ou plusieurs blocs distincts du copolymère séquencé avec une teneur en vinyle de < 20 % ou >= 22 % dans le bloc de diène conjugué B.

8. Composition de bitume modifié à polymères selon l'une quelconque des revendications 1 à 7, dans laquelle le copolymère séquencé est produit par l'une quelconque parmi une polymérisation anionique séquentielle et une polymérisation anionique séquentielle suivie d'un couplage.

9. Composition de bitume modifié à polymères selon la revendication 8, dans laquelle le copolymère séquencé a la formule A-B-A', et dans laquelle le copolymère séquencé est produit par polymérisation anionique séquentielle.

10. Composition de bitume modifié à polymères selon la revendication 8, dans laquelle le copolymère séquencé a la formule (A-B)ₙ-X-(B-A')ₘ, et dans laquelle le copolymère séquencé est produit par polymérisation anionique séquentielle suivie d'un couplage avec un agent de couplage.

11. Composition de bitume modifié à polymères selon la revendication 10, dans laquelle l'agent de couplage est choisi dans le groupe des méthoxysilanes, des silanes halogénés, des époxydes, des adipates, des benzoates, du dioxyde de carbone, du diméthyldiméthoxysilane, du diméthyldibchlorosilane, de l'adipate de diéthyle et de leurs mélanges.

12. Composition de bitume modifié à polymères selon l'une quelconque des revendications 8 à 11, dans laquelle au moins un modificateur de microstructure est ajouté au procédé de polymérisation pour contrôler la teneur en vinyle du bloc B, et dans laquelle le modificateur de microstructure est choisi parmi les éthers, les amines, les éthers dialkyliques de glycols et leurs mélanges.

13. Composition de bitume modifié à polymères selon l'une quelconque des revendications 1 à 12, comprenant en outre :
au moins un agent de réticulation ; et
éventuellement des additifs supplémentaires.

14. Composition de bitume modifié à polymères selon la revendication 13, dans laquelle la composition est utilisée dans un produit de chaussée en enrobé bitumineux ou un produit de couverture bitumineux.

15. Composition de bitume modifié à polymères selon la revendication 13, dans laquelle la composition est utilisée dans les chaussées neuves, la préservation des chaussées, la réhabilitation des chaussées, les enrobés bitumineux à chaud, les enrobés bitumineux à froid, les enrobés bitumineux tièdes, les enrobés à base de bitume émulsionné, les membranes de bitume modifié, les membranes autoadhésives, les bardeaux résistants aux chocs, les stratifiés, les adhésifs pour languettes de bardeaux, les corps de bardeaux, les feuilles, les rouleaux, les revêtements de canalisations, les mastics d'étanchéité, les membranes d'amortissement acoustique, les moquettes, les ouvrages ferroviaires, les produits de remplissage de fissures, les enduits superficiels et les microrevêtements.
